# EUROPEAN PATENT SPECIFICATION

(11) **EP 4 064 079 B1**
(45) Date of publication and mention of the grant of the patent: **24.12.2025**
(21) Application number: 21190961.9
(22) Date of filing: 12.08.2021
(51) Int. Cl.: G06F 21/31, B41J 29/38, G06F 3/033, H04W 12/06, H04W 12/69, B41J 29/393, G08B 21/24, H04N 1/00, H04N 1/44

(54) **INFORMATION PROCESSING APPARATUS AND RECORDING MEDIUM RECORDING INFORMATION PROCESSING PROGRAM**
INFORMATIONSVERARBEITUNGSVORRICHTUNG UND AUFZEICHNUNGSMEDIUM MIT DARAUF AUFGEZEICHNETEM INFORMATIONSVERARBEITUNGSPROGRAMM
APPAREIL DE TRAITEMENT D'INFORMATIONS ET SUPPORT D'ENREGISTREMENT ENREGISTRANT UN PROGRAMME DE TRAITEMENT D'INFORMATIONS

(30) Priority: 22.03.2021 JP 2021047643
(43) Date of publication of application: 28.09.2022
(73) Proprietor: Fujifilm Business Innovation Corp., Tokyo 107-0052 (JP)
(72) Inventor: KAJITANI, Noriyuki, Kanagawa 220-8668 (JP)
(74) Representative: Meissner Bolte Partnerschaft mbB

(56) References cited:
- JP-A- 2016 226 044
- US-A1- 2020 034 522
- OKEREAFOR KENNETH ET AL: "Fingerprint Biometric System Hygiene and the Risk of COVID-19 Transmission", vol. 5, no. 1, 25 April 2020 (2020-04-25), pages e19623, XP055882806, Retrieved from the Internet <URL:https://biomedeng.jmir.org/2020/1/e19623/PDF> [retrieved on 20220124], DOI: 10.2196/19623

## Description

### Technical Field

The present invention relates to an information processing apparatus and a recording medium recording an information processing program.

### Related Art

Patent Literature 1 discloses a touch-type input panel device in which a touch-type input panel is provided on an upper portion of a display screen of a display unit, and the touch-type input panel device includes a position detection sensor that detects input position information and a pressure detection sensor that detects an input pressing force. A pressing state of an inputter is determined based on detection results of the position detection sensor and the pressure detection sensor, and sensitivity adjustment of the detection sensors is performed based on a determination result.

Patent Literature 2 discloses that when a fingertip touches a draggable icon on a displayed screen, it is notified that the icon can be dragged; when the icon is pressed, a size and a color of the icon are changed to notify that the dragging can be started; when the fingertip is returned to an original touch state and moved, the icon is dragged accordingly; when the icon is pressed by the fingertip when the fingertip reaches a predetermined position, the size and the color of the icon are changed and the position setting is performed at the position; and when the fingertip is released, the icon is fixed at the position.

### Citation list

### Patent Literature

Patent Literature 1: JP-A-2012-123695
Patent Literature 2: JP-A-2005-196810 Patent Literature 3: JP2016173652A

### Summary

In view of the concern of hygiene, there is a demand that a person does not want to touch a place touched by another person when operating an operation unit.

Accordingly, an object of the present invention is to provide an information processing apparatus and an information processing program capable of clearly indicating a region of an operation unit touched by another person.

According to a first aspect of the present disclosure, there is provided an information processing apparatus including a processor configured to: recognize an authenticated user by user authentication; and perform a process of displaying, on a display unit, an image indicating a region on an operation unit touched by an unauthenticated user other than the authenticated user.

An information processing apparatus according to a second aspect is the information processing apparatus according to the first aspect, wherein the processor is configured to display a region having a predetermined risk level in a recognizable display mode.

An information processing apparatus according to a third aspect is the information processing apparatus according to the first or the second aspect, wherein the processor is configured to display, on the display unit, an image indicating a region satisfying a predetermined condition among regions on the operation unit where the unauthenticated user touched.

An information processing apparatus according to a fourth aspect is the information processing apparatus according to the third aspect, wherein the processor is configured to display an image indicating a region on the operation unit where the unauthenticated user touched a predetermined number of times or more in a predetermined time as the region satisfying the predetermined condition.

An information processing apparatus according to a fifth aspect is the information processing apparatus according to the third aspect, wherein the processor is configured to display an image indicating a region on the operation unit where a predetermined number or more of the unauthenticated user touched as the region satisfying the predetermined condition.

An information processing apparatus according to a sixth aspect is the information processing apparatus according to any one of the first to fourth aspects, wherein the operation unit is a touch panel, and the processor is configured to further perform a process of changing a region for displaying a display button overlapping the image to another region that does not overlap the image or that has an overlap less than a current overlap.

An information processing apparatus according to a seventh aspect is the information processing apparatus according to the sixth aspect, wherein the processor is configured to, when the region for displaying the display button entirely overlaps the image, change the region for displaying the display button to another region that does not overlap the image or that has an overlap less than the current overlap.

An information processing apparatus according to an eighth aspect is the information processing apparatus according to the sixth or seventh aspect, wherein the processor is configured to, when there is no other region that does not overlap or has an overlap less than the current overlap, perform a display prompting cleaning.

An information processing apparatus according to a ninth aspect is the information processing apparatus according to any one of the first to eighth aspects, wherein the processor is configured to further perform a process of notifying the authenticated user when the authenticated user touches the image.

An information processing apparatus according to a tenth aspect is the information processing apparatus according to the ninth aspect, wherein the processor is configured to notify the authenticated user by performing a display prompting hand washing.

An information processing apparatus according to an eleventh aspect is the information processing apparatus according to any one of the first to tenth aspects, wherein the processor is configured to perform a display prompting cleaning when a range of a region on the operation unit where the unauthenticated user touched is equal to or greater than a predetermined threshold value.

There is provided an information processing program recorded in a recording medium according to a twelfth aspect, causing a computer to execute processing of recognizing a user by user authentication, and displaying, on a display unit, an image indicating a region touched by another user other than an authenticated user on an operation unit.

According to the first aspect, it is possible to provide an information processing apparatus capable of clearly indicating a region of an operation unit touched by another person.

According to the second aspect, it is possible to recognize a region touched by another person by dividing the level.

According to the third aspect, it is possible to confirm a region touched by the other person corresponding to a predetermined condition.

According to the fourth aspect, it is possible to confirm a region touched by another user for a predetermined number of times or more in a predetermined time.

According to the fifth aspect, it is possible to confirm a region touched by a predetermined number or more of other users.

According to the sixth aspect, it is possible to reduce a hygienic risk as compared with a case where the display button is not moved when the display button overlaps the image.

According to the seventh aspect, it is possible to reliably reduce the hygienic risk as compared with the case where the display button is not moved when the display button entirely overlaps the image.

According to the eighth aspect, it is possible to notify that cleaning is necessary.

According to the ninth aspect, it is possible to notify that the user has touched a region having a hygienic risk.

According to the tenth aspect, it is possible to recognize that hand washing is necessary.

According to the eleventh aspect, it is possible to promote cleaning at a time when cleaning is necessary.

According to the twelfth aspect, it is possible to provide an information processing program capable of clearly indicating a region of an operation unit touched by another person.

### Brief Description of the Drawings

Exemplary embodiment(s) of the present invention will be described in detail based on the following figures, wherein:
Fig. 1 is a perspective view illustrating an external appearance of an image forming apparatus according to an exemplary embodiment;
Fig. 2 is a block diagram illustrating a configuration of an electrical system of the image forming apparatus according to the exemplary embodiment;
Fig. 3 is a functional block diagram illustrating an example of a functional configuration of a control unit of the image forming apparatus according to the exemplary embodiment;
Fig. 4 is a diagram illustrating an example of touch coordinates and date and time of use for each user ID;
Fig. 5 is a diagram illustrating an example of a risk level determination table;
Fig. 6 is a diagram illustrating an example of touch coordinates and a risk level notified to a touch area warning display unit by a touch area warning management unit;
Fig. 7 is a diagram illustrating an example in which places with a risk level equal to or higher than a predetermined level are displayed;
Fig. 8 is a flowchart illustrating an example of a flow of a process performed by the control unit of the image forming apparatus according to the exemplary embodiment;
Fig. 9 is a flowchart illustrating an example of a flow of a process in a case where a process of moving a display button corresponding to a region having a high risk level and a process of displaying a message prompting cleaning on a display are added;
Fig. 10 is a diagram illustrating an example in which the display button of a risk region is moved and displayed;
Fig. 11 is a flowchart illustrating an example of a flow of a process according to a modification performed by the control unit of the image forming apparatus according to the exemplary embodiment; and
Fig. 12 is a diagram illustrating a form in which functions of the touch area warning management unit and a touch history management unit of the control unit are provided in a management server 70.

### Detailed Description

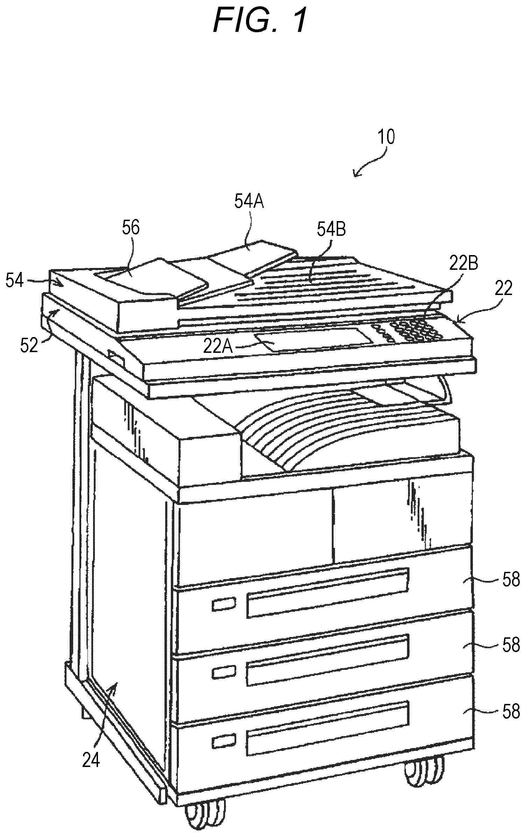

Hereinafter, an example of an exemplary embodiment of the present invention will be described in detail with reference to the drawings. In the present exemplary embodiment, an image forming apparatus will be described as an example of an information processing apparatus. Fig. 1 is a perspective view illustrating an external appearance of an image forming apparatus 10 according to the present exemplary embodiment. The image forming apparatus 10 according to the present exemplary embodiment has a printing function of receiving various types of data via a communication line such as a network and performing image forming processing based on the received data. The image forming apparatus 10 according to the present exemplary embodiment also has a reading function of reading a document to obtain image information representing the document, a copying function of copying an image recorded on the document onto a paper sheet, a facsimile function of transmitting and receiving various data via a telephone line (not shown), and the like.

In addition, the image forming apparatus 10 according to the present exemplary embodiment includes a document reading unit 52 in an upper portion of the apparatus, and an image forming unit 24 is disposed below the document reading unit 52. The document reading unit 52 includes a document transporting unit (not shown) in a document cover 54. The document transporting unit sequentially draws documents 56 placed on a document feeding unit 54A provided on the document cover 54, and transports the documents 56 onto a platen glass (not shown) to perform reading of an image recorded on the documents 56. Further, the document transporting unit discharges the documents 56 whose image reading is completed onto a document discharge unit 54B provided in the document cover 54.

The document reading unit 52 is provided with a user interface 22 that receives various instruction operations from a user. The user interface 22 is provided with a display 22A as a touch panel on which a display button for realizing reception of an instruction operation by a software program and various types of information are displayed, a hardware key 22B such as a numeric key, and the like. The touch panel is an example of an operation unit and an example of a display unit. As the display 22A, a touch panel type obtained by combining a display device such as a liquid crystal panel and a position input device such as a touch pad is applied. The user interface 22 is used as a display button of the display 22A, a setting of the number of copies and a magnification when the copying function is used by the hardware key 22B, a dial key of a telephone when the facsimile function is used, and the like. The hardware key 22B may be omitted.

On the other hand, the image forming unit 24 includes a sheet feed storage unit 58 in which paper sheets serving as a recording medium for image formation are stored. In the image forming unit 24, the paper sheets stored in the sheet feed storage unit 58 are taken out one by one, and an image based on the image data is formed on the paper sheet by, for example, an electro-photographic process. Further, in the image forming unit 24, the paper sheets on which the image formation is performed are sequentially discharged onto a sheet discharge unit (not shown).

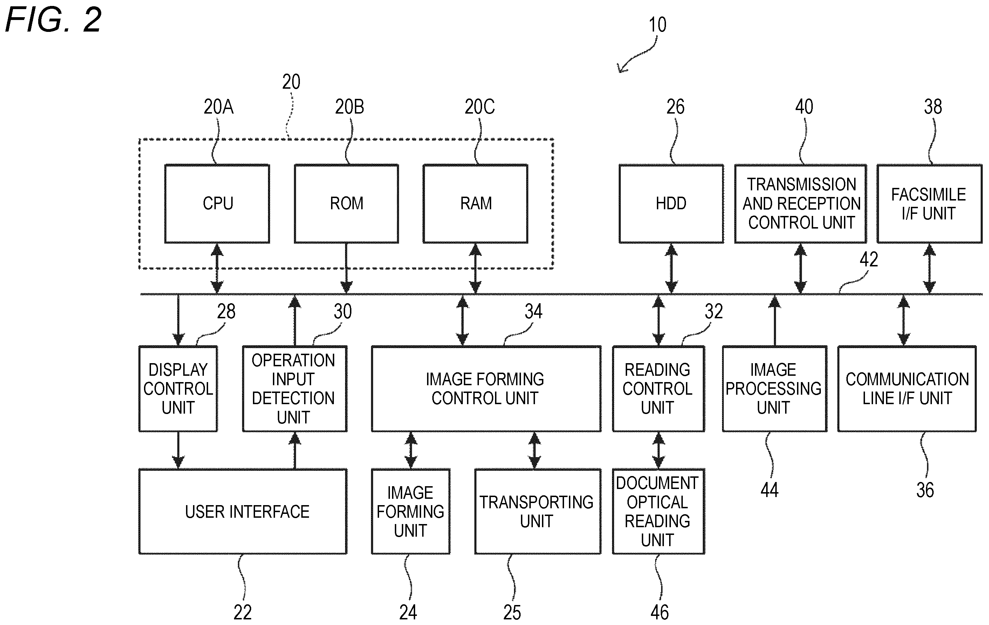

Fig. 2 is a block diagram illustrating a configuration of of an electrical system of the image forming apparatus 10 according to the present exemplary embodiment.

As illustrated in Fig. 2, the image forming apparatus 10 according to the present exemplary embodiment includes a control unit 20 including a central processing unit (CPU) 20A, a read only memory (ROM) 20B, and a random access memory (RAM) 20C. The CPU 20A controls the entire operation of the image forming apparatus 10. The RAM 20C is used as a work area or the like when the CPU 20A executes various programs. The ROM 20B stores various control programs, various parameters, and the like in advance. In the image forming apparatus 10, each unit of the control unit 20 is electrically connected by a system bus 42.

Further, the image forming apparatus 10 according to the present exemplary embodiment includes a hard disk drive (HDD) 26 that stores various data, application programs, and the like. The image forming apparatus 10 further includes a display control unit 28 that is connected to the user interface 22 and controls display of various operation screens and the like on the display 22A of the user interface 22. The image forming apparatus 10 further includes an operation input detection unit 30 that is connected to the user interface 22 and detects an operation instruction input via the user interface 22. In the image forming apparatus 10, the HDD 26, the display control unit 28, and the operation input detection unit 30 are electrically connected to the system bus 42. In the image forming apparatus 10 according to the present exemplary embodiment, an example in which the HDD 26 is provided is described, but the present invention is not limited thereto, and a non-volatile storage unit such as a flash memory may be provided.

The image forming apparatus 10 according to the present exemplary embodiment further includes a reading control unit 32 that controls an optical image reading operation by a document optical reading unit 46 and a document feeding operation by the document transporting unit, and an image forming control unit 34 that controls an image forming process by the image forming unit 24 and transportation of a paper sheet to the image forming unit 24 by a transporting unit 25. The image forming apparatus 10 further includes a communication line interface (communication line I/F) unit 36 that is connected to a communication line and performs transmission and reception of communication data to and from another external device such as a server connected to the communication line, and an image processing unit 44 that performs various types of image processing. The image forming apparatus 10 further includes a facsimile interface (facsimile I/F) unit 38 that is connected to a telephone line (not shown) and performs transmission and reception of facsimile data to and from a facsimile machine connected to the telephone line. The image forming apparatus 10 further includes a transmission and reception control unit 40 that controls transmission and reception of facsimile data via the facsimile interface unit 38. In the image forming apparatus 10, the transmission and reception control unit 40, the reading control unit 32, the image forming control unit 34, the communication line interface unit 36, the facsimile interface unit 38, and the image processing unit 44 are electrically connected to the system bus 42.

With the above configuration, the image forming apparatus 10 according to the present exemplary embodiment causes the CPU 20A to access the RAM 20C, the ROM 20B, and the HDD 26. In the image forming apparatus 10, the CPU 20A controls display of information such as an operation screen and various messages on the display 22A of the user interface 22 via the display control unit 28. In the image forming apparatus 10, the CPU 20A controls the operations of the document optical reading unit 46 and the document transporting unit via the reading control unit 32. In the image forming apparatus 10, the CPU 20A controls the operations of the image forming unit 24 and the transporting unit 25 via the image forming control unit 34 and controls the transmission and reception of communication data via the communication line interface unit 36. In the image forming apparatus 10, the CPU 20A controls transmission and reception of facsimile data via the facsimile interface unit 38 by the transmission and reception control unit 40. Further, in the image forming apparatus 10, the CPU 20A grasps an operation content in the user interface 22 based on the operation information detected by the operation input detection unit 30, and executes various types of control based on the operation content.

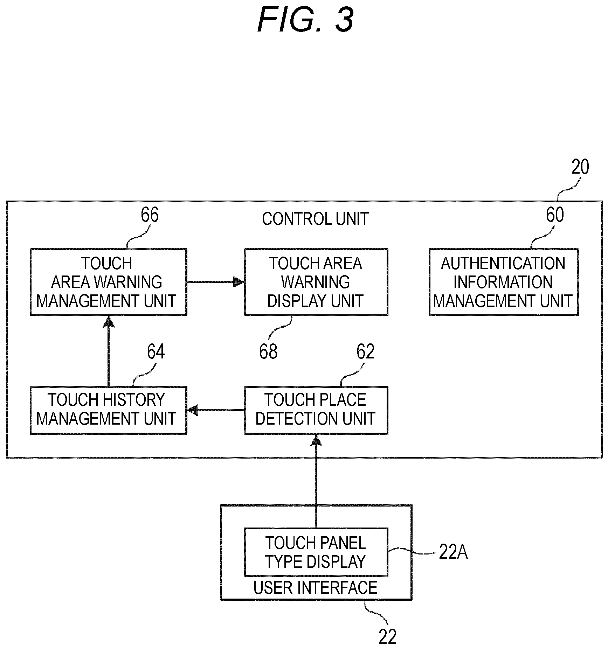

Next, in the image forming apparatus 10 according to the present exemplary embodiment, a functional configuration implemented by the CPU 20A of the control unit 20 developing a program stored in the ROM 20B in the RAM 20C and executing the program will be described. Fig. 3 is a functional block diagram illustrating an example of a functional configuration of a control unit 20 of the image forming apparatus 10 according to the present exemplary embodiment.

The control unit 20 has functions of an authentication information management unit 60, a touch place detection unit 62, a touch history management unit 64, a touch area warning management unit 66, and a touch area warning display unit 68.

The authentication information management unit 60 manages login information of a user when the user logs in to the image forming apparatus 10 using user ID. The state where the user is logging in to the image forming apparatus 10 is an example of the state in which the processor recognizes the user by user authentication.

The touch place detection unit 62 detects a touch place of the authenticated user (for example, currently log-in user) on the touch panel type display 22A, and acquires a time of the touch.

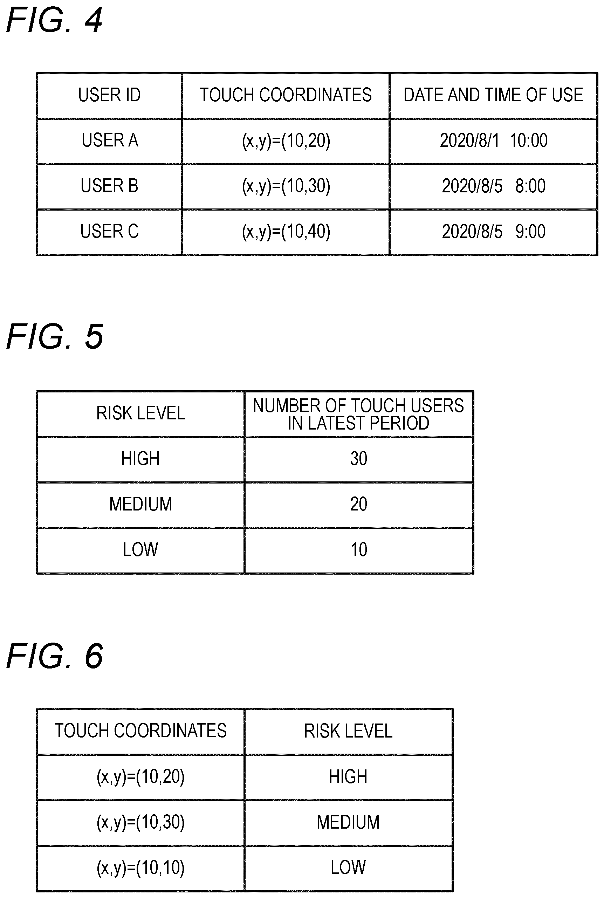

The touch history management unit 64 manages the touch history for each user by storing touch coordinates and a time of a touch place detected by the touch place detection unit 62 as a history for each user ID. For example, as illustrated in Fig. 4, the touch coordinates and the date and time of use for each user ID are stored as a history. When a user performs an operation of sliding the finger while touching the display 22A (a so-called swipe operation), for example, plural touch coordinates in the trajectory of the operation may be stored.

The touch area warning management unit 66 counts places that are touched within a predetermined time by unauthenticated users (for example, currently not log-in user) other than the authenticated user based on the history collected by the touch history management unit 64 and the user information managed by the authentication information management unit 60. Then, the risk level is determined in accordance with the setting of a predetermined risk level determination table. For example, as illustrated in Fig. 5, the risk level determination table is classified into three levels of high, medium, and low. In a predetermined latest period, a case where the number of touch users is 30 is set to a high level, a case where the number of touch users is 20 is set to a medium level, and a case where the number of touch users is 10 is set to a low level. The touch area warning management unit 66 notifies the touch area warning display unit 68 of a determined risk level to prompt the touch area warning display unit 68 to display the determined risk level. For example, as illustrated in Fig. 6, the touch coordinates and the risk level are notified. In the example of Fig. 6, a position at which the center touch coordinates are (x, y) = (10, 20) is at the high level, a position at which the center touch coordinates are (x, y) = (10, 30) is at the medium level, and a position at which the center touch coordinates are (x, y) = (10, 10) is at the low level. In the present exemplary embodiment, a case in which the risk level is determined by the number of touches within a certain period of time is described as an example, but the method of determining the risk level is not limited thereto. For example, the determination may be made by adding a touch time, the temperature, the humidity, and the like to the determination condition. Specifically, the determination condition is set such that the longer the touch time is, the higher the risk is, and the drier and the lower the temperature is, the higher the risk is. The reset of the risk level determination table (the touch coordinates and the risk level) may be performed at predetermined time intervals. Alternatively, the reset may be performed by operating a reset button or the like after the display 22A is cleaned. Alternatively, cleaning of the display 22A may be detected and reset by detecting a trajectory or the like corresponding to the cleaning operation of the display 22A.

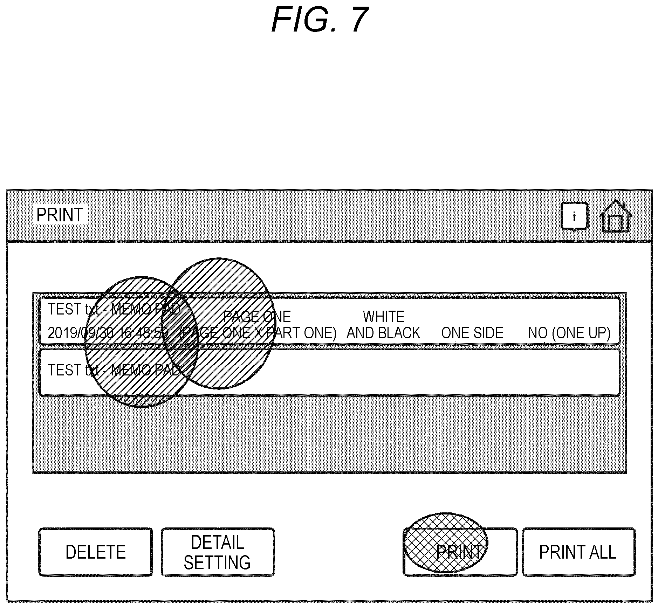

The touch area warning display unit 68 performs a process of displaying, on the display 22A, an image or the like for calling attention of a place where the risk is increasing according to a predetermined risk level in hygiene. For example, a position where the risk level is equal to or higher than a predetermined level may be displayed on the display 22A, or may be displayed on the display 22A in a display mode in which the risk level can be recognized. Specifically, as shown in Fig. 7, an image is displayed on a place where the risk level is equal to or higher than a predetermined level. As an example, an image showing a place with the high level and a place with the medium level is displayed. The image to be displayed may be displayed as a region image including a predetermined range including the center coordinates of a place having the hygiene risk. In the example of Fig. 7, an example in which regions of a predetermined level or more are displayed by a hatching image is illustrated. In the example, an image with high level cross hatching is displayed on a region overlapping a print button, and two images with medium level hatching are displayed with overlapping each other on two selection items. Note that a display mode of the image such as a display color may be changed in accordance with the risk level, and the risk level may be visually notified by displaying the image in a predetermined display mode in accordance with the risk level.

In the case where the touch panel type display 22A is provided as in the image forming apparatus 10 according to the present exemplary embodiment configured as described above, a large number of persons touch the same place with respect to a button for instructing a printing function that is often used, the start of printing after selecting a print button, and the like. As the number of persons who touch the same place increases, the hygienic risk increases.

Therefore, in the image forming apparatus 10 according to the present exemplary embodiment, an authentication state of the user is checked, and when the authenticated user touches the display 22A, a place where the authenticated user touches is internally recorded. That is, the touch history management unit 64 records the authenticated user, a touched place and a time at which the authenticated user touched the touched place in the history, and when the same authenticated user touches the same place, the touch history management unit 64 stores only the history of the touched place without counting the number of times of touching. Conversely, when an unauthenticated user touched within a certain period of time, it is determined that there is a risk in terms of hygiene, and a place touched by the unauthenticated user is displayed as an image on the region, thereby easily guiding the authenticated user not to touch the place.

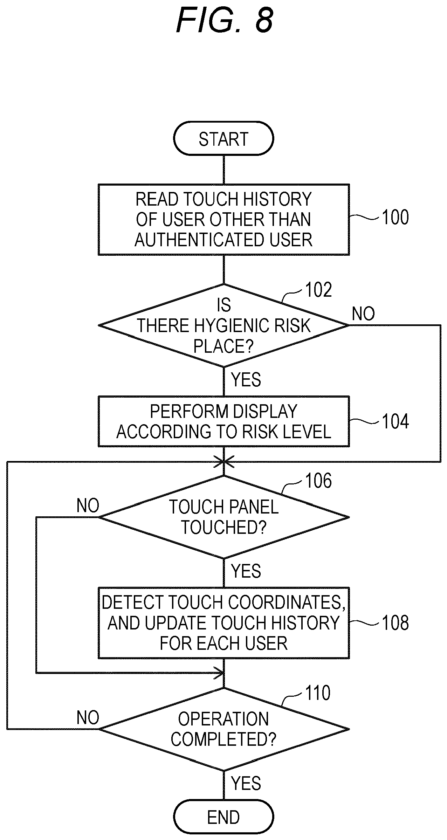

Next, specific processes performed by the control unit 20 of the image forming apparatus 10 according to the present exemplary embodiment configured as described above will be described. Fig. 8 is a flowchart illustrating an example of a flow of a process performed by the control unit 20 of the image forming apparatus 10 according to the exemplary embodiment. The process of Fig. 8 is started, for example, when the user is authenticated by a predetermined method, for example, when the user logs in to the image forming apparatus 10 using user ID.

In step 100, the CPU 20A reads the touch history of an unauthenticated user other than the authenticated user, and the process proceeds to step 102. That is, the touch area warning management unit 66 counts places that are touched within a predetermined time by the unauthenticated user based on the history collected by the touch history management unit 64 and the user information managed by the authentication information management unit 60. Then, the risk levels of the places are determined in accordance with the setting of a predetermined risk level determination table.

In step 102, the CPU 20A determines whether or not there is a hygienic risk place. In this determination, the touch area warning management unit 66 determines, for example, whether or not there is a place having a risk level equal to or higher than a predetermined threshold value. When the determination is affirmative, the process proceeds to step 104, and when the determination is negative, the process proceeds to step 106.

In step 104, the CPU 20A performs display according to the risk level on the display 22A, and the process proceeds to step 106. That is, the touch area warning display unit 68 performs display, on the display 22A, an image or the like for calling attention of a place where the risk is increasing according to a predetermined risk level in hygiene. As a result, a place with a hygienic risk touched by the unauthenticated user is displayed on the display 22A.

In step 106, the CPU 20A determines whether or not a touch is made on the touch panel. In this determination, the touch place detection unit 62 determines whether or not a touch on the touch panel type display 22A by the authenticated user is detected. When the determination is affirmative, the process proceeds to step 108, and when the determination is negative, the process proceeds to step 110.

In step 108, the CPU 20A detects touch coordinates, updates the touch history for each user, and proceeds to step 110. That is, the touch history management unit 64 stores the touch coordinates and the time of the touch place detected by the touch place detection unit 62 together with the user ID as a history.

In step 110, the CPU 20A determines whether or not the operation is completed. In this determination, for example, it is determined whether or not an operation for instructing completion, a logout operation, or the like is performed. When the determination is negative, the process returns to step 106 to repeat the above-described process, and when the determination is affirmative, the series of process ends.

In the process of Fig. 8, an example is described in which a place with a hygienic risk is displayed when the user is authenticated, but a display timing of the place with a hygienic risk is not limited thereto. For example, the place may be displayed after the operation is completed to notify the user that a place with risk has been touched when the user has touched the place with risk. Alternatively, the display may be performed by operating a display button or the like.

In addition, in the process of Fig. 8, the display is only performed according to the hygienic risk level, but the present invention is not limited thereto. For example, the history of the display button of a used function may be stored at the time of touching, and the frequently used display button may be moved to and displayed in a region that is the least touched by the unauthenticated user, thereby further reducing the risk in hygiene.

Alternatively, the rearrangement of the display buttons may be performed under conditions such as changing the arrangement of the display buttons in a case where a part or all of the display buttons overlap a region having a hygienic risk, or changing the arrangement of the display buttons in a case where a ratio of overlapping of a region determined to have a high risk with the region of the display buttons reaches a ratio equal to or greater than a predetermined threshold value. Further, the condition may be changed by setting.

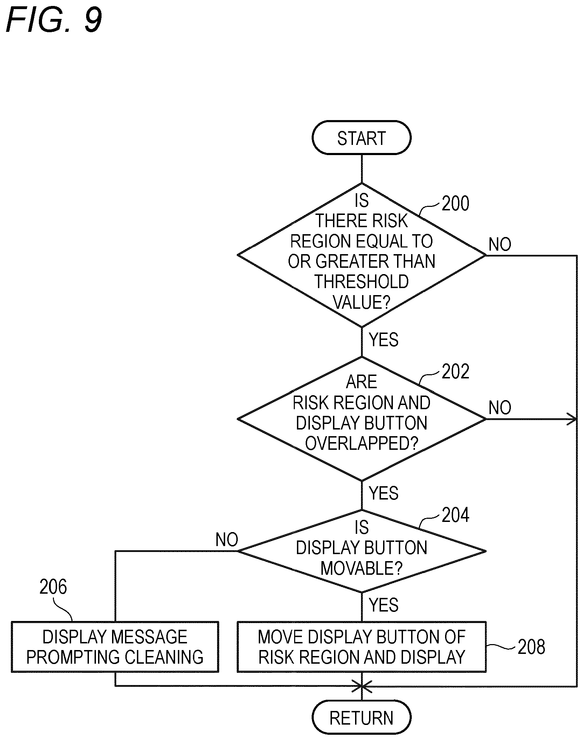

As an example, a process of moving a display button corresponding to a region having a high risk level, a process of displaying a message prompting cleaning on the display 22A, or the like may be added to the process of Fig. 8. Specifically, the processes of Fig. 9 may be added between step 102 and step 104 in the process of Fig. 8. Fig. 9 is a flowchart illustrating an example of a flow of a process in a case where a process of moving a display button corresponding to a region having a high risk level and a process of displaying a message prompting cleaning on the display 22A are added.

In step 200, the CPU 20A determines whether or not there is a region having a risk level that is equal to or higher than a predetermined threshold value. For example, it is determined whether or not there is a place having at least one of the high level, the medium level, and the low level. When the determination is negative, the process of Fig. 9 is ended and the process proceeds to step 104 described above, and when the determination is affirmative, the process proceeds to step 202.

In step 202, it is determined whether or not the risk region and a region for displaying the display button are overlapped with each other. In this determination, for example, it is determined whether the risk region and the region for displaying the display button are partially or entirely overlapped. When the determination is affirmative, the process proceeds to step 204, and when the determination is negative, the series of processes in Fig. 9 is ended, and the process proceeds to step 104 described above.

In step 204, the CPU 20A determines whether or not the region for displaying the display button overlapping the risk region is changeable (whether or not the display button is movable). In this determination, for example, it is determined whether or not the region for displaying the display button can be changed to a region that does not overlap the risk region or a region that has less overlap than the current overlap can be changed. For example, when a range of a region on the operation unit where the unauthenticated user touched is equal to or greater than a predetermined threshold value, the CPU20A determines that the region for displaying the display button cannot be changed. When the determination is negative, the process proceeds to step 206, and when the determination is affirmative, the process proceeds to step 208.

In step 206, the CPU 20A displays a message prompting cleaning on the display 22A, ends the process of Fig. 9, and proceeds to step 104 described above. For example, a message such as "Please wipe the touch panel." is displayed on the display 22A to prompt cleaning.

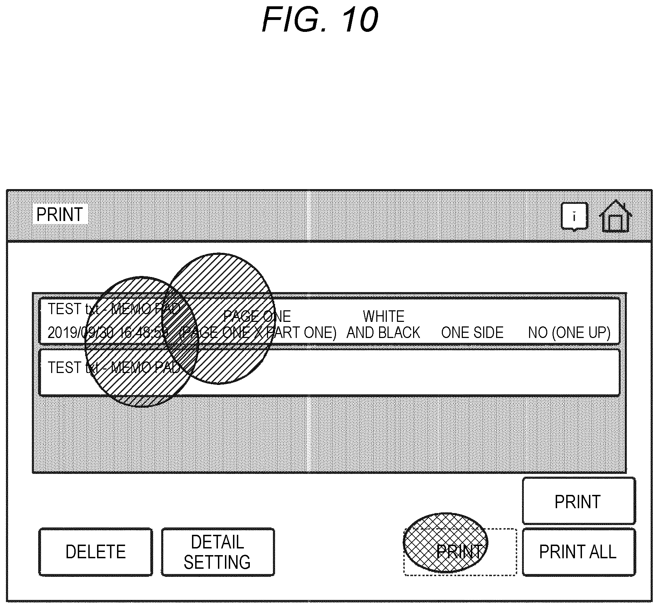

On the other hand, in step 208, the CPU 20A moves and displays the display button of the risk region, ends the process of Fig. 9, and proceeds to step 104 described above. For example, as illustrated in Fig. 10, the display button "print" is moved from a position (indicated by the dotted line) that is the risk region to a position (indicated by the solid line) that does not overlap the risk region for display.

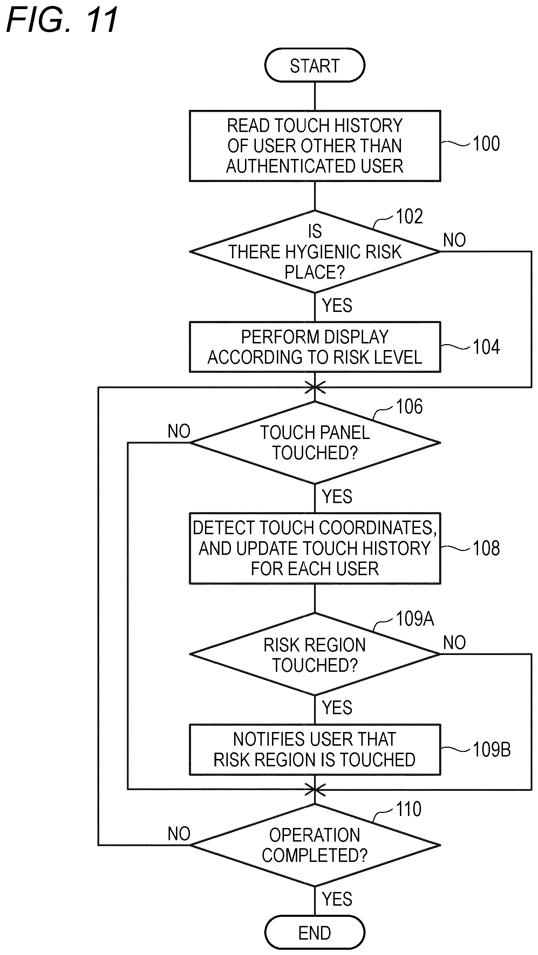

As illustrated in Fig. 11, the processes of steps 109A and 109B may be added between step 108 and step 110 of Fig. 8. Fig. 11 is a flowchart illustrating an example of a flow of a process according to a modification performed by the control unit 20 of the image forming apparatus 10 according to the exemplary embodiment. The same processes as those in Fig. 8 are denoted by the same reference numerals.

In step 100, the CPU 20A reads the touch history of the unauthenticated user, and the process proceeds to step 102. That is, the touch area warning management unit 66 counts places that are touched within a predetermined time by a user other than users authenticated based on the history collected by the touch history management unit 64 and the user information managed by the authentication information management unit 60. Then, the risk level is determined in accordance with the setting of a predetermined risk level determination table.

In step 102, the CPU 20A determines whether or not there is a hygienic risk place. In this determination, the touch area warning management unit 66 determines, for example, whether or not there is a place having a risk level equal to or higher than a predetermined threshold value. When the determination is affirmative, the process proceeds to step 104, and when the determination is negative, the process proceeds to step 106.

In step 104, the CPU 20A performs display according to the risk level on the display 22A, and the process proceeds to step 106. That is, the touch area warning display unit 68 performs display, on the display 22A, an image or the like for calling attention of a place where the risk is increasing according to a predetermined risk level in hygiene.

In step 106, the CPU 20A determines whether or not a touch is made on the touch panel. In this determination, the touch place detection unit 62 determines whether or not a touch on the touch panel type display 22A by the authenticated user is detected. When the determination is affirmative, the process proceeds to step 108, and when the determination is negative, the process proceeds to step 110.

In step 108, the CPU 20A detects touch coordinates, updates the touch history for each user, and proceeds to step 109A. That is, the touch history management unit 64 stores the touch coordinates and the time of the touch place detected by the touch place detection unit 62 together with the user ID as a history.

In step 109A, the CPU 20A determines whether or not a touch is made on the risk region. In this determination, it is determined whether or not a region that is a region having a hygienic risk and is displayed according to the risk level in step 104 is touched. When the determination is affirmative, the process proceeds to step 109B, and when the determination is negative, the process proceeds to step 110.

At step 109B, the CPU 20A notifies the user that the risk region is touched, and the process proceeds to step 110. For example, a message indicating that the region having a hygienic risk is touched may be displayed on the display 22A or sounded for notification. Alternatively, a message prompting the user to wash hands, such as "You have touched a region touched by many people, so please wash your hands." may be displayed on the display 22A or sounded for notification.

In step 110, the CPU 20A determines whether or not the operation is completed. In this determination, for example, it is determined whether or not an operation for instructing completion, a logout operation, or the like is performed. When the determination is negative, the process returns to step 106 to repeat the above-described process, and when the determination is affirmative, the series of process ends.

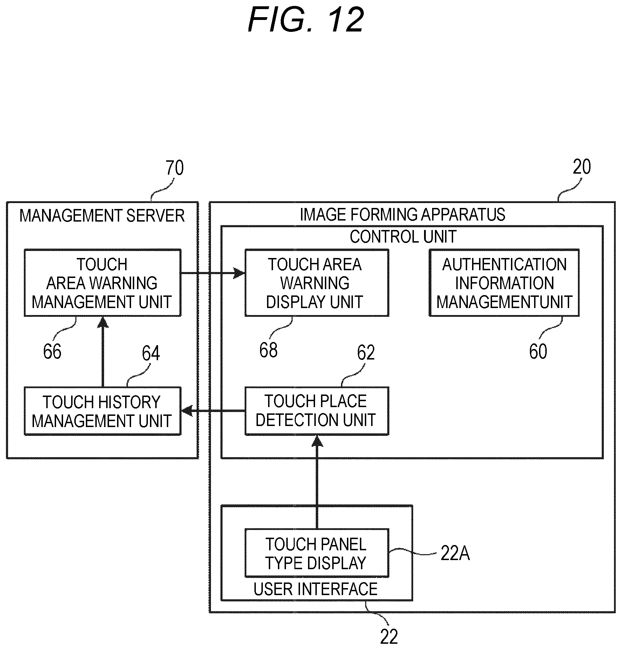

In the exemplary embodiment described above, when there is no sufficient memory or storage for storing the history in the image forming apparatus 10, a management server may be prepared and the history may be transmitted to the management server. For example, as shown in Fig. 12, the functions of the touch area warning management unit 66 and the touch history management unit 64 of the control unit 20 may be provided in a management server 70.

In the exemplary embodiment described above, the image forming apparatus 10 is described by taking the touch panel type display 22A as an example, but the present invention is not limited to the image forming apparatus 10, and may be applied to a touch panel of another apparatus.

In the exemplary embodiment described above, the touch panel type display 22A is described as an example, but the present invention is not limited to the touch panel type display 22A. For example, a configuration may be adopted in which a position where an operation unit such as a hardware key is operated is detected, similarly to the exemplary embodiment described above, the number of touches, date and time, and the like for each user are stored as a history, a risk level is determined, and the hardware key or the like corresponding to the risk place is displayed on a monitor or the like. In the case of a hardware key, since the key arrangement cannot be changed, for example, for a key having a hygienic risk, a function of a key having a hygienic risk may be assigned to another key having no risk and having no functional relationship, and it may be notified that the operation can be notified by the other key.

In the exemplary embodiment described above, the image forming apparatus 10 is described as an example, but the present invention is not limited thereto. Other devices may be applied as long as the device includes an operation unit and a display unit.

In the exemplary embodiment described above, the CPU is described as an example of the processor, but the term "processor" refers to hardware in a broad sense. Examples of the processor include general processors (e.g., CPU) and dedicated processors (e.g., GPU: Graphics Processing Unit, ASIC: Application Specific Integrated Circuit, FPGA: Field Programmable Gate Array, and programmable logic device).

In the exemplary embodiment described above, the term "processor" is broad enough to encompass one processor or plural processors in collaboration which are located physically apart from each other but may work cooperatively. The order of operations of the processor is not limited to one described in the exemplary embodiment described above, and may be changed.

In addition, the process performed by the control unit 20 of the image forming apparatus 10 according to the exemplary embodiment described above may be a process performed by software, a process performed by hardware, or a process in which both processes are combined. The process performed by each unit of the functions of the control unit 20 may be stored as a program in a storage medium and distributed.

The present invention is not limited to the above, and in addition to the above, it goes without saying that various modifications can be made within a range that does not deviate from the scope of the present invention.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing apparatus comprising:
a display unit;
an operation unit;
a processor configured to:
count places touched within a predetermined time by unauthenticated users
recognize an authenticated user by user authentication; and
perform a process of displaying, on the display unit, an image indicating a region on an operation unit touched by any unauthenticated user,
wherein an unauthenticated user is any user other than the authenticated user;
wherein the operation unit is a touch panel, and
the processor is configured to further perform a process of changing a region for displaying a display button overlapping the image to another region that does not overlap the image or that has an overlap less than a current overlap.

2. The information processing apparatus according to claim 1,
wherein the region has a predetermined risk level and displays a predetermined range and center coordinates.

3. The information processing apparatus according to claim 1 or 2,
wherein the region satisfies a predetermined condition among regions on the operation unit where any unauthenticated user touched.

4. The information processing apparatus according to claim 3,
wherein the region on the operation unit where any unauthenticated user or unauthenticated users touched a predetermined number of times or more in a predetermined time is the region satisfying the predetermined condition.

5. The information processing apparatus according to claim 1,
wherein the processor is configured to, when the region for displaying the display button entirely overlaps the image, change the region for displaying the display button to another region that does not overlap the image or that has an overlap less than the current overlap.

6. The information processing apparatus according to claim 1 or 5,
wherein the processor is configured to, when there is no other region that does not overlap or has an overlap less than the current overlap, perform a display prompting cleaning.

7. The information processing apparatus according to any one of claims 1 to 6,
wherein the processor is configured to further perform a process of notifying the authenticated user when the authenticated user touches the image.

8. The information processing apparatus according to claim 7,
wherein the processor is configured to notify the authenticated user by performing a display prompting hand washing.

9. The information processing apparatus according to any one of claims 1 to 8,
wherein the processor is configured to perform a display prompting cleaning when a range on the operation unit where any unauthenticated user or unauthenticated users touched is equal to or greater than a predetermined threshold value.

10. A recording medium recording an information processing program causing a computer to execute processing of:
counting places touched within a predetermined time by unauthenticated users;
recognizing a user by user authentication, and
displaying, on a display unit, an image indicating a region touched by any unauthenticated user,
wherein an unauthenticated user is any user other than the authenticated user;
and changing a region for displaying a display button overlapping the image to another region that does not overlap the image or that has an overlap less than a current overlap.

## Patentansprüche

1. Informationsverarbeitungsvorrichtung, umfassend:
eine Anzeigeeinheit;
eine Betätigungseinheit;
einen Prozessor, der so konfiguriert ist, dass er:
Orte, die innerhalb einer vorbestimmten Zeit von nicht authentifizierten Benutzern berührt werden, zählt
einen authentifizierten Benutzer durch Benutzerauthentifizierung erkennt; und
einen Prozess des Anzeigens, auf der Anzeigeeinheit, eines Bildes durchführt, das einen Bereich auf einer Betätigungseinheit, der von einem beliebigen nicht authentifizierten Benutzer berührt wird, angibt,
wobei ein nicht authentifizierter Benutzer ein beliebiger Benutzer ist, der von dem authentifizierten Benutzer verschieden ist;
wobei die Betätigungseinheit ein Touch-Panel ist, und
der Prozessor so konfiguriert ist, dass er ferner einen Prozess des Änderns eines Bereichs zum Anzeigen einer Anzeigetaste, die das Bild überlappt, in einen anderen Bereich, der das Bild nicht überlappt oder der eine Überlappung, die kleiner als eine aktuelle Überlappung ist, aufweist, durchführt.

2. Informationsverarbeitungsvorrichtung nach Anspruch 1,
wobei der Bereich ein vorbestimmtes Risikoniveau aufweist und einen vorbestimmten Bereich und Mittelpunktskoordinaten anzeigt.

3. Informationsverarbeitungsvorrichtung nach Anspruch 1 oder 2,
wobei der Bereich unter Bereichen auf der Betätigungseinheit, die ein beliebiger nicht authentifizierter Benutzer berührt hat, eine vorbestimmte Bedingung erfüllt.

4. Informationsverarbeitungsvorrichtung nach Anspruch 3,
wobei der Bereich auf der Betätigungseinheit, den ein beliebiger nicht authentifizierter Benutzer eine vorbestimmte oder mehr Anzahl an Malen in einer vorbestimmten berührt hat, der Bereich ist, der die vorbestimmte Bedingung erfüllt.

5. Informationsverarbeitungsvorrichtung nach Anspruch 1,
wobei der Prozessor so konfiguriert ist, dass er, wenn der Bereich zum Anzeigen der Anzeigetaste das Bild vollständig überlappt, den Bereich zum Anzeigen der Anzeigetaste in einen anderen Bereich, der das Bild nicht überlappt oder der eine Überlappung, die kleiner als die aktuelle Überlappung ist, aufweist, ändert.

6. Informationsverarbeitungsvorrichtung nach Anspruch 1 oder 5,
wobei der Prozessor so konfiguriert ist, dass er, wenn es keinen anderen Bereich, der sich nicht überlappt oder eine Überlappung, die kleiner als die aktuelle Überlappung ist, aufweist, eine Anzeige, die Reinigung auffordert, durchführt.

7. Informationsverarbeitungsvorrichtung nach einem der Ansprüche 1 bis 6,
wobei der Prozessor so konfiguriert ist, dass er ferner einen Prozess des Benachrichtigens des authentifizierten Benutzers durchführt, wenn der authentifizierte Benutzer das Bild berührt.

8. Informationsverarbeitungsvorrichtung nach Anspruch 7,
wobei der Prozessor so konfiguriert ist, dass er den authentifizierten Benutzer benachrichtigt, indem er eine Anzeige, die Händewaschen auffordert, durchführt.

9. Informationsverarbeitungsvorrichtung nach einem der Ansprüche 1 bis 8,
wobei der Prozessor so konfiguriert ist, dass er eine Anzeige, die Reinigung auffordert, durchführt, wenn ein Bereich auf der Betätigungseinheit, den ein beliebiger nicht authentifizierter Benutzer oder beliebige nicht authentifizierte Benutzer berührt haben, gleich oder größer als ein vorbestimmter Schwellenwert ist.

10. Aufzeichnungsmedium, das ein Informationsverarbeitungsprogramm aufzeichnet, das einen Computer veranlasst, auszuführen, Verarbeitung des:
Zählens von Orten, die innerhalb einer vorbestimmten Zeit von nicht authentifizierten Benutzern berührt werden;
Erkennens eines Benutzers durch Benutzerauthentifizierung, und
Anzeigens, auf einer Anzeigeeinheit, eines Bildes, das einen Bereich angibt, der von einem beliebigen nicht authentifizierten Benutzer berührt wird,
wobei ein nicht authentifizierter Benutzer ein beliebiger Benutzer ist, der von dem authentifizierten Benutzer verschieden ist;
und Änderns eines Bereichs zum Anzeigen einer Anzeigetaste, die das Bild überlappt, in einen anderen Bereich, der das Bild nicht überlappt oder der eine Überlappung, die kleiner als eine aktuelle Überlappung ist, aufweist.

## Revendications

1. Appareil de traitement d'informations comprenant :
une unité d'affichage ;
une unité d'opération ;
un processeur configuré pour :
compter des emplacements touchés pendant une durée prédéterminée par des utilisateurs non authentifiés
reconnaître un utilisateur authentifié par une authentification d'utilisateur ; et
effectuer un processus d'affichage, sur l'unité d'affichage, d'une image indiquant une région sur une unité d'opération touchée par un utilisateur non authentifié quelconque,
dans lequel un utilisateur non authentifié est un utilisateur quelconque autre que l'utilisateur authentifié ;
dans lequel l'unité d'opération est un panneau tactile, et
le processeur est configuré pour effectuer en outre un processus de modification d'une région d'affichage d'un bouton d'affichage chevauchant l'image vers une autre région qui ne chevauche pas l'image ou qui présente un chevauchement inférieur à un chevauchement actuel.

2. Appareil de traitement d'informations selon la revendication 1,
dans lequel la région présente un niveau de risque prédéterminé et affiche une plage prédéterminée et des coordonnées centrales.

3. Appareil de traitement d'informations selon la revendication 1 ou la revendication 2,
dans lequel la région satisfait une condition prédéterminée parmi des régions de l'unité d'opération où un utilisateur non authentifié quelconque a touché.

4. Appareil de traitement d'informations selon la revendication 3,
dans lequel la région de l'unité d'opération où un utilisateur non authentifié quelconque ou des utilisateurs non authentifiés quelconques ont touché un nombre prédéterminé de fois ou plus pendant une durée prédéterminée est la région satisfaisant la condition prédéterminée.

5. Appareil de traitement d'informations selon la revendication 1,
dans lequel le processeur est configuré pour, lorsque la région d'affichage du bouton d'affichage chevauche entièrement l'image, modifier la région d'affichage du bouton d'affichage vers une autre région qui ne chevauche pas l'image ou qui présente un chevauchement inférieur au chevauchement actuel.

6. Appareil de traitement d'informations selon la revendication 1 ou la revendication 5,
dans lequel le processeur est configuré pour, lorsqu'il n'existe aucune autre région qui ne chevauche pas ou présente un chevauchement inférieur au chevauchement actuel, effectuer un affichage invitant à un nettoyage.

7. Appareil de traitement d'informations selon l'une quelconque des revendications 1 à 6,
dans lequel le processeur est configuré pour effectuer en outre un processus de notification à l'utilisateur authentifié lorsque l'utilisateur authentifié touche l'image.

8. Appareil de traitement d'informations selon la revendication 7,
dans lequel le processeur est configuré pour notifier l'utilisateur authentifié en effectuant un affichage invitant à se laver des mains.

9. Appareil de traitement d'informations selon l'une quelconque des revendications 1 à 8,
dans lequel le processeur est configuré pour effectuer un affichage invitant à un nettoyage lorsqu'une plage sur l'unité d'opération où un utilisateur non authentifié quelconque ou des utilisateurs non authentifiés quelconques ont touché est égale ou supérieure à une valeur seuil prédéterminée.

10. Support d'enregistrement enregistrant un programme de traitement d'informations amenant un ordinateur à exécuter un traitement de :
compter des emplacements touchés pendant une durée prédéterminée par des utilisateurs non authentifiés ;
reconnaître un utilisateur par une authentification d'utilisateur, et
afficher, sur une unité d'affichage, une image indiquant une région touchée par un utilisateur non authentifié quelconque,
dans lequel un utilisateur non authentifié est un utilisateur quelconque autre que l'utilisateur authentifié ;
et modifier une région d'affichage d'un bouton d'affichage chevauchant l'image vers une autre région qui ne chevauche pas l'image ou qui présente un chevauchement inférieur à un chevauchement actuel.
